# EUROPÄISCHE PATENTANMELDUNG

(11) **EP 0 531 774 A1**
(43) Veröffentlichungstag der Anmeldung: **17.03.1993**
(21) Anmeldenummer: 92114274.1
(22) Anmeldetag: 20.08.1992
(51) Int. Cl.: B65G 1/08, B65G 47/88

(54) **Vorrichtung zum Ausgeben von in Magazinen gestapelten Stückgütern**

(30) Priorität: 21.08.1991 DE 9110327 U
(71) Anmelder: KNAPP LOGISTIK AUTOMATION, Ges. m.b.H., A-8042 Graz (AT)
(72) Erfinder: Freudelsperger, Karl, Dipl.-Ing., A-7071 Hausmannstätten (AT)
(74) Vertreter: Kinzebach, Werner, Dr.

(57) **Zusammenfassung**

Die Erfindung betrifft eine Vorrichtung zum Ausgeben von in Magazinen (1) gestapelten Stückgütern (5), wobei die Magazine (1) gegenüber der Vertikalen geneigt sind, die untere Stirnseite jedes Magazins (1) eine Ausgabeöffnung (6) darstellt, und sich an der Ausgabeöffnung (6) ein Ausgeber (7) befindet, der einen von der unteren Magazinseitenwand (2) in das Innere des Magazins (1) ragenden Anschlag (208) umfaßt, wobei dieser Anschlag (208) in die untere Magazinseitenwand (2) versenkbar ausgebildet ist.

## Beschreibung

Die Erfindung betrifft eine Vorrichtung zum Ausgeben von in Magazinen gestapelten Stückgütern, wobei die Magazine gegenüber der Vertikalen geneigt angeordnet sind, die untere Stirnseite jedes Magazins eine Ausgabeöffnung bildet, und sich an der Ausgabeöffnung ein Ausgeber befindet, der einen von der unteren Magazinseitenwand in das Innere des Magazins ragenden Anschlag umfaßt. Bei den Stückgütern kann es sich zum Beispiel um in Schachteln verpackte Medikamente, Kosmetika oder Chemikalien handeln.

Eine derartige Vorrichtung ist in der Druckschrift BE-A-899 517 offenbart. Dabei umfaßt der Ausgeber neben dem Anschlag, der starr ausgeführt ist, ein Sternrad. Das Sternrad ist mittig in einer Ausnehmung des Anschlags und des Magazinbodens angeordnet. In der Ruhestellung des Ausgebers decken sich zwei Flanken des Sternrads mit dem Magazinboden und dem Anschlag. In dieser Stellung liegt das unterste Stückgut an dem Anschlag an. Bei einer Betätigung des Ausgebers wird das Sternrad um eine Zacke gedreht. Dabei wird das unterste Stückgut von einer Sternradzacke über die Anschlagkante gehoben und rutscht dann unter der Wirkung der Schwerkraft über den Anschlag und zwei, den Anschlag überragende Sternradzacken hinweg aus dem Magazin. Die weiteren im Magazin befindlichen Stückgüter rutschen bis zum Anschlag nach. Die Drehung des Sternrads um eine Zacke wird durch eine Hin- und Herbewegung einer Kulissenführung vermittelt, die wiederum mit der Kolbenstange einer Kolben-Zylinder-Anordnung verbunden ist.

Die bekannte Vorrichtung ist durch Verwendung eines kulissengeführten, von einer Kolben-Zylinder-Anordnung angetriebenen Sternrads relativ aufwendig, was insbesondere in großen Kommissioniereinrichtungen mit hunderten von Magazinen zu hohen Kosten führt. Nachteilig ist auch, daß das Stückgut über die den Anschlag überragenden Sternradzacken rutschen muß; dies bedingt eine relativ steile Anordnung der Magazine.

Ausgehend vom beschriebenen Stand der Technik ist es Aufgabe der Erfindung, eine einfach aufgebaute Ausgebe-Vorrichtung bereitzustellen. Außerdem soll es möglich sein, die Magazine auch weniger geneigt anzuordnen.

Gelöst wird diese Aufgabe durch eine Vorrichtung gemäß dem Oberbegriff des Anspruchs 1, die dadurch gekennzeichnet ist, daß der Anschlag in die untere Magazinseitenwand versenkbar ausgebildet ist. Vorteilhaft wird der versenkbare Anschlag durch eine Anschlagleiste gebildet, die rechtwinklig an freien Ende einer einseitig unter der unteren Seitenwand eingespannten Federzunge angeordnet ist. Bei einer anderen Ausführungsform weist der Ausgeber einen Hubstempel auf, der dem Anschlag benachbart und in Ausgaberichtung vor diesem angeordnet ist, wobei der Hubstempel quer zur Stapelrichtung bewegbar ist, und zwar zwischen einer in der unteren Magazinseitenwand versenkten Stellung und einer in das Magazin ragenden Stellung. Der Neigungswinkel der Magazine zur Vertikalen wird dabei höchstens so groß gewählt, daß ein Abwärtsgleiten der Stückgüter unter der Wirkung der Schwerkraft und der Reibungskräfte bei Betätigung des Ausgebers noch gewährleistet ist.

Die Antriebsmittel zum Betätigen des Anschlags (bei den erstgenannten Ausführungsformen) oder des Hubstempels (bei der zweitgenannten) sind vorzugsweise als Elektromagnet ausgebildet. Dabei kann es sich um einen Einfachspulenmagnet handeln, bei dem die Betätigungsstellung des Anschlags bzw. des Hubstempels durch eine Erregung der Spule erreicht wird, während die Rückkehr in die Ruhestellung unter der Wirkung eines Rückholmittels, zum Beispiel einer Feder, geschieht. Als eine weitere Möglichkeit kann ein Doppelspulenmagnet eingesetzt werden, bei dem beide Stellungen durch Erregung jeweils einer der Spulen eingenommen wird.

Vorteilhaft verwendet man bei beiden Vorrichtungen Magazine, die einen U-förmigen Querschnitt aufweisen, wobei der Steg des "U" die untere Magazinseitenwand und die Schenkel des "U" die seitlichen Magazinseitenwände bilden. Die Rundungen des "U" können dabei schwach ausgeprägt sein oder sogar verschwinden. Damit fällt auch ein rechteckiger, einseitig offener Querschnitt unter die Bezeichnung "U-förmig".

Vorteilhaft sind mehrere Magazine parallel nebeneinander in einer Ebene angeordnet. Mehrere solcher Ebenen können fachartig übereinander angeordnet werden; man bezeichnet sie daher auch als "Fachböden". Die Anordnung der Magazine in einer Ebene oder einer anderen Serienanordnung erlaubt eine Überwachung des ordnungsgemäßen Ausgebens der Stückgüter aus allen Magazinen mit nur einer einzigen Lichtschranke, wobei der Lichtstrahl der Lichtschranke quer über alle Magazinenden verläuft. Damit mehrere Magazine mit einer Lichtschranke überwacht werden können, erfolgt die Ausgabe mehrerer Stückgüter zeitlich nacheinander.

Vorzugsweise sind die Antriebsmittel zum Betätigen des Anschlags bzw. des Hubstempels und gegebenenfalls der Signalausgang der Lichtschranke mit einem Rechner verbunden, der automatisch die Ausgeber steuert und gegebenenfalls das Ausgeben der Stückgüter überwacht.

Wie die vorstehenden Ausführungen zeigen, hat die erfindungsgemäße Vorrichtung den Vorteil, sehr einfach aufgebaut zu sein; als bewegliches Teil ist nur ein einfacher Elektromagnet mit einem aufgesetzten Stempel oder mit einer Federzunge vorgesehen. Dies ermöglicht einen kostengünstigen Aufbau und Betrieb von großen Konditioniereinrichtungen. Außerdem sind die Ausgeber bei Betätigung vom Stückgut leichter zu überwinden als der im Stand der Technik beschriebene Ausgeber. Dies trifft insbesondere für die Ausführungsformen mit versenkbarem Anschlag zu, gilt aber auch für die Ausführungsform mit Hubstempel, wenn man feste Anschläge gleicher Höhe vergleicht.

Im folgenden wird die Erfindung anhand der angefügten Figuren näher beschrieben. Die Figur 1 zeigt eine beispielhafte Ausführungsform einer erfindungsgemäßen Vorrichtung mit Hubstempel-Ausgeber. Die Figuren 2 und 3 zeigen zwei verschiedene Ausführungsformen eines Ausgebers mit versenkbarem Anschlag.

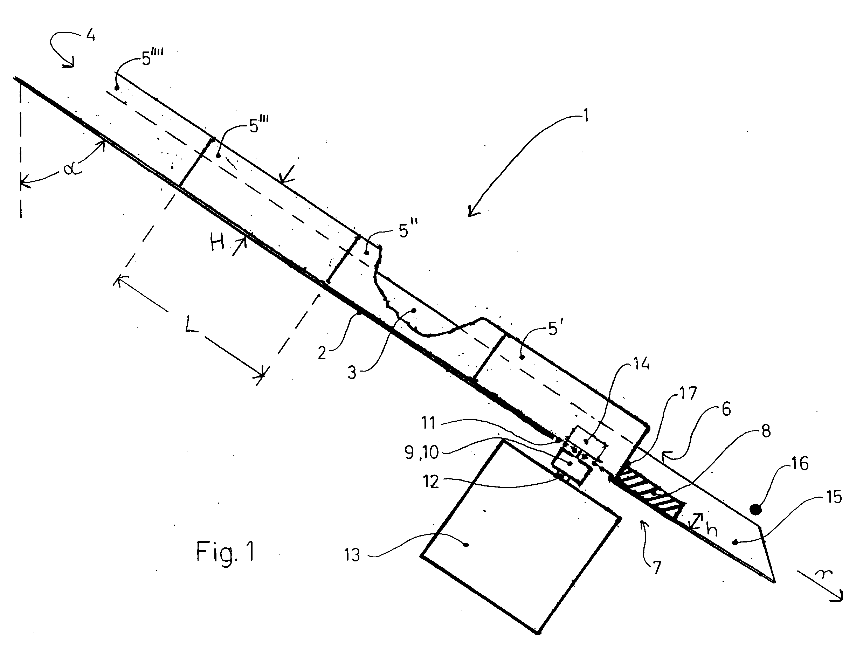

Die Figur 1 zeigt einen Querschnitt eines Fachbodens längs einer Magazinachse. Der Fachboden wird gebildet von mehreren parallel nebeneinander in einer Ebene angeordneten Magazinen (1), von denen eines im Schnitt sichtbar ist. Die Neigung (α) des Magazins (1) gegenüber der Vertikalen beträgt 45°. Das Magazin (1) wird gebildet durch eine untere Magazinseitenwand (2), die schräg nach unten weist, und seitliche Magazinseitenwände (3). Das Magazin (1) ist oben offen; senkrecht zur Magazinachse hat es einen rechteckigen, einseitig offenen Querschnitt. Im Magazin (1) befindet sich ein Stapel (4) von quaderförmigen Stückgütern (5', 5'', 5''', 5'''').

Das Magazin (1) ist an seiner unteren Stirnseite offen; diese untere Öffnung bildet die Ausgabeöffnung (6) für das unterste Stückgut (5') des Stapels (4). An der Ausgabeöffnung (6) ist ein Ausgeber (7) angeordnet.

Der Ausgeber (7) wird durch einen Anschlag (8) und einen Hubstempel (9) gebildet. Beide sind benachbart an der unteren Magazinseitenwand (2) angeordnet, wobei in Ausgaberichtung (r) gesehen, der Hubstempel (9) vor dem Anschlag (8) liegt.

Der Anschlag (8) ist quaderförmig und ragt unbeweglich von der Innenseite der unteren Magazinseitenwand (2) mit der Höhe (h) in das Innere des Magazins (1). Die Höhe (h) ist klein gegenüber der Länge (L) und der Höhe (H) des Stückguts (5); in der Figur hat das Verhältnis h/L den Wert 0,1 und das Verhältnis h/H den Wert 0,3. Diese Verhältnisse sind jedoch nicht fest vorgegeben, da die Vorrichtung mit verschiedenen Stückgutabmessungen arbeiten kann. Bevorzugt sind Werte für h/L zwischen 0,01 und 0,2 und für h/H zwischen 0,05 und 0,5.

Der Hubstempel (9) ist in einer Ruhestellung (10) in einer Öffnung (11) der unteren Magazinseitenwand (2) versenkt. Der Abstand zwischen Hubstempel (9) und Anschlag (8) ist so gewählt, daß der Hubstempel (9) bei ruhendem Stückgut (5) für alle Stückgutabmessungen unter der ausgangsseitigen Hälfte des untersten Stückguts (5') liegt. Der Hubstempel (9) ist mit dem Ende eines beweglichen Ankers (12) eines Elektromagneten (13) verbunden. Der Hubstempel (9) ist quer zur Stapelrichtung in das Innere das Magazins (1) in eine Ausgebestellung (14) beweglich. Die Höhe des Hubstempels (9) in der Ausgebestellung (14) ist etwas größer als die Höhe (h) des Anschlags (9).

Das Magazin (1) setzt sich, in Ausgaberichtung (r) gesehen, jenseits des Ausgebers (7) fort und bildet dort eine Rutsche (15) zur Überführung der ausgegebenen Stückgüter (5) zu einer nicht gezeigten Sammel- oder Transportvorrichtung. Im Bereich der Rutsche (15) ist eine Lichtschranke vorgesehen, deren Lichtstrahl (16) parallel zum Fachboden quer zur Magazinachse über alle Magazine des Fachbodens verläuft. Der Lichtstrahl (16) ist so hoch über dem Fachboden positioniert, daß er einerseits nicht die seitlichen Magazinseitenwände (3) berührt, andererseits von abwärts gleitendem Stückgut (5) unterbrochen wird.

Die Elektromagnete (13) im Fachboden und der Signalausgang der Lichtschranke sind mit einem nicht gezeigten Rechner verbunden.

Im folgenden wird das Ausgeben von Stückgütern (5) beschrieben: Zunächst befindet sich im Magazin (1) ein ruhender Stapel (4) von Stückgütern (5' bis 5''''). Das unterste Stückgut (5') liegt am Anschlag (8) an. Der Hubstempel (9) befindet sich in seiner Ruhestellung (10). Zum Ausgeben des untersten Stückguts (5') wird der Magnet (13), gesteuert durch den Rechner, erregt; der Hubstempel (9) bewegt sich seine Ausgebestellung (14). Dadurch wird das ausgangsseitige Ende des Stückguts (5') über die Anschlagkante (17) gehoben, das andere Ende, welches das zweitunterste Stückgut (5'') berührt, wird nicht angehoben; das Stückgut (5') führt also eine Schwenkbewegung aus. Nach dem Anheben über die Anschlagkante (17) rutscht das Stückgut (5') unter der Wirkung der Schwerkraft zunächst über den Anschlag (8) hinweg und dann auf der Rutsche (15) schräg nach unten zu dem Sammel- oder Transportmittel. Dabei unterbricht es kurz den Lichtstrahl (16) der Lichtschranke, die ein entsprechendes Signal an den Rechner übergibt. Der Hubstempel (9) bleibt nur kurzfristig in der Ausgabestellung (14), und zwar so lange, daß ein Überwinden der Anschlagkante (17) durch das Stückgut (5') sichergestellt ist, und kehrt dann in die Ruhestellung (10) zurück. Der Stapel (4) der noch im Magazin befindlichen Stückgüter (5'' bis 5'''') rutscht unter der Wirkung der Schwerkraft nach unten, bis das jetzt unterste Stückgut (5'') zur Anlage an den Anschlag (8) kommt.

Durch Wiederholen des beschriebenen Vorgangs können weitere Stückgüter (5) aus dem denselben oder einem anderen Magazin (1) des Fachbodens ausgegeben werden. Dabei erfolgt die Ausgabe zeitlich nacheinander. Der zeitliche Abstand zwischen zwei Ausgabeoperationen ist mindestens so groß, daß sich die beiden abwärts gleitenden Stückgüter (5), in Richtung des Lichtstrahls (16) gesehen, räumlich nicht überlappen. Damit ist sichergestellt, daß der Lichtstrahl (16) von jedem ausgegebenen Stückgut (5) kurz unterbrochen wird. Kommt es trotz Ausgeberbetätigung nicht zu einer Ausgabe, etwa weil das Magazin (1) leer ist oder die Stückgüter (5) im Magazin (1) verklemmt sind, erfolgt keine Unterbrechung des Lichtstrahls (16) zu dem erwarteten Zeitpunkt. Auf diese Weise wird das ordnungsgemäße Ausgeben überwacht.

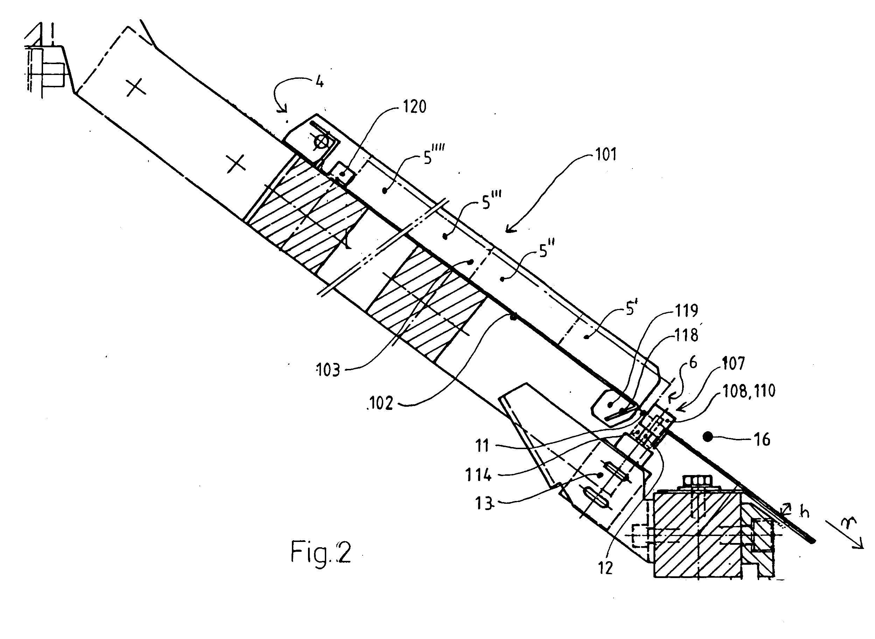

Im folgenden ist eine beispielhafte Ausführungsform mit versenkbarem Anschlag anhand Figur 2 näher beschrieben. Dabei sind nur die Unterschiede zu der oben beschriebenen Ausführungsform mit Hubstempel erwähnt; für alle nicht erwähnten Merkmale trifft das oben Beschriebene zu.

Der Ausgeber (107) besteht nur aus dem Anschlag (108), der hier beweglich ausgeführt ist; der Hubstempel (9) entfällt. Der Elektromagnet (13) und die Öffnung (11) sind unter den Anschlag (108) verschoben angeordnet; der Anschlag (108) ist mit dem Anker (12) verbunden. Die Bewegbarkeit des Anschlags (108) gleicht der des Hubstempels (9) der anderen Ausführungsform, nur daß hier Ruhe- und Ausgebeposition vertauscht sind; d.h. in der Ruhestellung (110) ragt hier der Anschlag (108) in das Innere des Magazins (101), während er in Ausgebestellung (114) in der (verschobenen) Öffnung (11) der unteren Magazinseitenwand (102) versenkt ist. In Ausgebeposition schließt die Oberseite des Anschlags (108) bündig mit der Innenfläche der unteren Magazinseitenwand (102) ab. Da die Stückgüter (5) hier über den versenkbaren Anschlag (108) rutschen, kann die Höhe (h) des Anschlags (108) in Ruhestellung (110) beliebig groß sein; die bei der anderen Ausführungsform angegebenen Mindestwerte für h/L und h/H treffen jedoch auch hier zu, um die Haltefunktion des Anschlags (108) sicherzustellen.

Der Ausgebevorgang weist folgende Unterschiede zu dem der anderen Ausführungsform mit Hubstempel auf: Zum Ausgeben wird der Anschlag (108) kurzfristig in die Ausgebestellung (114) gebacht. Das Stückgut (5') gleitet dann, zunächst ohne angehoben zu werden, auf den versekten Anschlag (108). Rechtzeitig bevor das nächste Stückgut auf den Anschlag (108) gleiten könnte, wird dieser wieder in die Ruhestellung (110) gehoben. Das ausgegebene Stückgut (5') befindet sich dabei zumindest noch teilweise auf dem Anschlag (108) und wird so mit angehoben.

Weitere Unterschiede der in Figur 2 gezeigten Ausführungsform gegenüber der in Figur 1 gezeigten betreffen die Magazinseitenwände: Die unteren Magazinseitenwände (102) werden durch einen durchgehenden ebenen Fachboden gebildet. Die seitlichen Magazinseitenwände werden durch Trennstege (103) gebildet, die auf den Fachboden quer zur Ausgaberichtung (r) verschiebbar angeordnet sind. An ihrem ausgabeseitigen Ende greifen die Trennstege (103) mit jeweils einer Zunge (118) in einen quer zur Magazinachse im Fachboden verlaufenden Schlitz (119) ein. An ihrem oberen Ende sind die Trennstege (103) mit jeweils einer Schraubverbindung (120), die ebenfalls in einen (in der Figur nicht gezeigten) Schlitz eingreift, am Fachboden in der gewünschten Position fixierbar. Durch die verschiebbare Ausbildung der Trennstege (103) kann die Breite der Magazine (101) verschiedenen Stückgut-Packungsgrößen angepaßt werden.

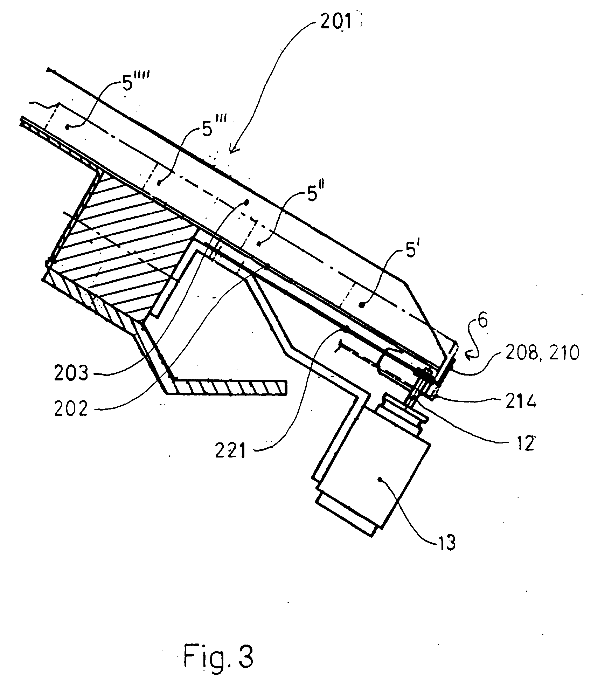

In Figur 3 ist schließlich eine weitere Ausführungsform mit versenkbarem Anschlag gezeigt. Im Unterschied zu der in Figur 2 gezeigten Ausführungsform wird hier der versenkbare Anschlag durch eine Anschlagleiste (208) gebildet. Die Anschlagleiste (208) verläuft quer zur Stapelachse. Sie ist rechtwinklig am freien Ende einer einseitig eingespannten Federzunge (221) angeordnet, und ist in das Magazininnere gerichtet. Die Federzunge (221) liegt unterhalb des unteren Magazinbodens (202) und verläuft in Ruhestellung (210) parallel zu diesem. Ihr freies Ende, ist mit dem Anker (12) eines Elektromagneten (13) verbunden. Das Magazin (201) endet, in Ausgaberichtung r gesehen, unmittelbar vor der Anschlagleiste (221); eine Rutsche ist in diesem Ausführungsbeispiel nicht vorgesehen.

In der Ruhestellung (210) ragt die Anschlagleiste (208) in das Innere des Magazins (201). Bei Erregung des Magneten (13) wird die Federzunge (221) und mit ihr die Anschlagleiste (208) aus der Ruhestellung (210) nach unten in die Ausgebestellung (214) gezogen. Dabei wird die Federzunge (221) elastisch verformt. In der Ausgebestellung (214) befindet sich die Anschlagleiste (208) auf der Höhe des unteren Magazinbodens (202) und gibt so das unterste Stückgut (5') frei. Bei Beendigung der Erregung des Magneten (13) bewirkt die Rückstellkraft der verformten Federzunge (221) eine Rückkehr in die Ruhestellung (210).

## Patentansprüche

1. Vorrichtung zum Ausgeben von in Magazinen gestapelten Stückgütern, wobei
die Magazine gegenüber der Vertikalen geneigt angeordnet sind,
die untere Stirnseite jedes Magazins eine Ausgabeöffnung bildet, und
sich an der Ausgabeöffnung ein Ausgeber befindet, der einen von der unteren Magazinseitenwand in das Innere des Magazins ragenden Anschlag umfaßt,
**dadurch gekennzeichnet,** daß
der Anschlag (108,208) in die untere Magazinseitenwand (102,202) versenkbar ausgebildet ist.

2. Vorrichtung nach Anspruch 1, dadurch gekennzeichnet, daß der versenkbare Anschlag durch eine Anschlagleiste (208) gebildet wird, die rechtwinklig am freien Ende einer einseitig unter der unteren Seitenwand eingespannten Federzunge (221) angeordnet ist.

3. Vorrichtung zum Ausgeben von in Magazinen gestapelten Stückgütern, wobei
die Magazine gegenüber der Vertikalen geneigt angeordnet sind,
die untere Stirnseite jedes Magazins eine Ausgabeöffnung bildet, und
sich an der Ausgabeöffnung ein Ausgeber befindet, der einen von der unteren Magazinseitenwand in das Innere des Magazins ragenden Anschlag umfaßt,
dadurch gekennzeichnet, daß
der Ausgeber (7) einen Hubstempel (9) aufweist, der dem Anschlag (8) benachbart und in Ausgaberichtung vor diesem angeordnet ist, wobei der Hubstempel (9) quer zur Stapelrichtung bewegbar ist, und zwar zwischen einer in der unteren Magazinseitenwand (2) versenkten Stellung (10) und einer in das Magazin (1) ragenden Stellung (14).

4. Vorrichtung nach einem der Ansprüche 1 bis 3,
dadurch gekennzeichnet, daß
die Antriebsmittel zum Betätigen des Anschlags (1,108,208) oder des Hubstempels (9) als Elektromagnete (13) ausgebildet sind.

5. Vorrichtung nach einem der Ansprüche 1 bis 4,
dadurch gekennzeichnet, daß
die Magazine (1) einen U-förmigen Querschnitt aufweisen, wobei der Steg des "U" die untere Magazinseitenwand (2 und die Schenkel des "U" die seitlichen Magazinseitenwände (3,103,203) bilden.

6. Vorrichtung nach einem der Ansprüche 1 bis 5,
dadurch gekennzeichnet, daß
die Magazine (1,101,201) parallel nebeneinander in einer Ebene angeordnet sind.

7. Vorrichtung nach einem der Ansprüche 1 bis 6,
dadurch gekennzeichnet, daß
eine Lichtschranke vorgesehen ist, wobei der Lichtstrahl (16) der Lichtschranke quer über alle Magazinenden der in der Ebene oder in einer anderen Serienanordnung angeordneten Magazine (1,101,201) verläuft.

8. Vorrichtung nach einem der Ansprüche 1 bis 7,
dadurch gekennzeichnet, daß
die Antriebsmittel zum Betätigen des Anschlags (108,208) oder des Hubstempels (9) und gegebenenfalls der Signalausgang der Lichtschranke mit einem Rechner verbunden sind.
